(19) Europäisches Patentamt
European Patent Office
Office européen des brevets

(11) Publication number : 0 470 788 B1

(12) **EUROPEAN PATENT SPECIFICATION**

(45) Date of publication of patent specification : **13.04.94 Bulletin 94/15**

(51) Int. Cl.$^5$ : **C10M 105/38**, C10M 171/00, C09K 5/04, // C10N20:04, C10N40:30

(21) Application number : **91307161.9**

(22) Date of filing : **05.08.91**

(54) **Synthetic lubricating oil.**

(30) Priority : **07.08.90 JP 207538/90**

(43) Date of publication of application : **12.02.92 Bulletin 92/07**

(45) Publication of the grant of the patent : **13.04.94 Bulletin 94/15**

(84) Designated Contracting States : **DE FR IT SE**

(56) References cited :
**EP-A- 0 430 657**
**WO-A-90/12849**
**CA-A- 819 715**
**CA-A- 854 728**
**US-A- 2 807 155**
**DATABASE WPIL, AN=91-153165, Derwent Publications Ltd, London, GB; & JP-A-3 088 892 (KAO CORP.)**

(73) Proprietor : **Nippon Oil Co., Ltd.**
**3-12, Nishishinbashi 1-chome Minato-ku**
**Tokyo 105 (JP)**

(72) Inventor : **Ishida, Noboru**
**340, Nakanomachi, Ida,öNakahara-ku**
**Kawasaki-shi, Kanagawa-ken (JP)**
Inventor : **Sunami, Motoshi**
**4-4-17, Fujimidai**
**Nerima-ku, Tokyo (JP)**
Inventor : **Sasaki, Umekichi**
**6-7-13, Shukugawara, Tama-ku**
**Kawasaki-shi, Kanagawa-ken (JP)**
Inventor : **Ishikawa, Tatsuyuki**
**338 Iwaicho, Hodogaya-ku**
**Yokohama-shi, Kanagawa-ken (JP)**
Inventor : **Hasegawa, Hiroshi**
**1-1 Negishikasodai, Naka-ku**
**Yokohama-shi, Kanagawa-ken (JP)**

(74) Representative : **Griffin, Kenneth David et al**
**Saunders & Dolleymore 9, Rickmansworth Road**
**Watford Hertfordshire WD1 7HE (GB)**

EP 0 470 788 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a synthetic lubricating oil, and more specifically, it relates to a synthetic lubricating oil which mainly comprises an ester having a specific structure and which is particularly useful as refrigeration lubricants.

Heretofore, as refrigerator oils, there have been usually used naphthenic mineral oils having a kinematic viscosity of from 10-200 cSt at 40°C, paraffinic mineral oils, alkylbenzenes, polyglycol oils, mixtures thereof, and blends of these base oils and additives.

On the other hand, as halogeno carbon refrigerants used in refrigerators, there are utilized CFC-11, CFC-12, CFC-115, HCFC-22 and the like.

Of these halogeno carbon refrigerants, CFC-11, CFC-12, CFC-115 and the like in which all the hydrogen atoms of a hydrocarbon are replaced with halogen atoms such as chlorine atoms tend to break an ozone layer, and for this reason, the employment of these halogeno carbons is regulated under a law. Therefore, hydrogen-containing halogeno carbons, above all, hydrofluoro carbons such as HFC-134a and HFC-152a are increasingly employed in place of the CFC series. In particular, HFC-134a is similar in thermodynamic properties to CFC-12 which has been heretofore used in many refrigerators such as domestic refrigerators, air-conditioners and car air-conditioners, and thus HFC-134a is promising as the replaceable refrigerant.

The refrigerator oil must meet various requirements, and the compatibility of the oil with the refrigerant is extremely important from the viewpoints of the lubricating properties and the system efficiency of the refrigerator. However, the refrigerator oil comprising a base oil such as the naphthenic mineral oil, the paraffinic mineral oil or the alkylbenzene is scarcely compatible with a non-chlorine halogeno carbon such as HFC-134a. Therefore, if such a kind of refrigerator oil is used in combination with HFC-134a, a two-layer separation occurs at ordinary temperature, and oil return properties which are most important in the refrigerator system deteriorate. In consequence, refrigeration efficiency decreases or lubricating properties decline, with the result that a compressor tends to burn and other problems occur inconveniently. Hence, the employment of the above-mentioned oil in combination with HFC-134a is not practical.

In order to solve these problems, the present inventors have developed a polyglycol refrigerator oil which is much more excellent in the compatibility with HFC-134a as compared conventional known refrigerator oils, and have already submitted a patent application regarding this refrigerator oil (Japanese Patent Application Laid-open Nos. 1-256594, 1-274191 and the like). In addition, U.S. Patent No. 4,755,316 discloses a polyglycol refrigerator oil which is compatible with HFC-134a.

On the other hand, the refrigeration lubricant which can be used in the compressor of the domestic refrigerator or the like is required to have high electrical insulating properties. Of the known refrigerator oils, alkylbenzenes and the mineral oils have the highest electrical insulating properties, but as described above, they are scarcely compatible with a hydrofluoro carbon such as HFC-134a. Furthermore, the polyglycol oil which is excellent in compatibility with HFC-134a is poor in electrical insulating properties inconveniently.

The present inventors have found that an ester having a specific structure is excellent in compatibility with a halogno carbon such as HFC-134a and has high electrical insulating properties, and they have already filed a patent application regarding this ester (Japanese Patent Application No. 1-341245 and the like).

However, the above-mentioned ester is excellent in various characteristics but brings about hydrolysis, and for this reason, it is not always suitable for devices such as a refrigerator and a car air-conditioner which are required to be driven keeping up a high reliability for a long period of time. Therefore, it is strongly desired to develop a refrigeration lubricant having high compatibility with a hydrogen-containing halogeno carbon such as HFC-134a, satisfactory electrical insulating properties, and stability to hydrolysis.

Heretofore, an ester synthetic oil is known as a synthetic oil having excellent heat resistance and used as a usual industrial lubricating oil or the like. However, this kind of oil involves the above-mentioned problem of the hydrolysis, and in consequence, the development of an ester synthetic oil having the excellent stability to the hydrolysis is largely expected.

An object of the present invention is to provide a synthetic lubricating oil mainly comprising a specific ester and having high compatibility with a hydrogen-containing halogeno carbon such as HFC-134a, high electrical insulating properties, and the stability to hydrolysis.

The present inventors have paid much attention to various excellent characteristics of an ester synthetic oil and researched intensively so as to develop a lubricating oil which can meet the above-mentioned requirements. As a result, it has been found that an ester of a carboxylic acid having a specific structure and a neopentyl polyol is excellent in compatibility with a hydrogen-containing halogeno carbon such as HFC-134a and has high electrical insulating properties and good stability to hydrolysis, and the present invention has been achieved on the basis of this knowledge.

That is, the present invention intends to provide a synthetic lubricating oil which is characterized by containing, as the main component, an ester represented by the formula

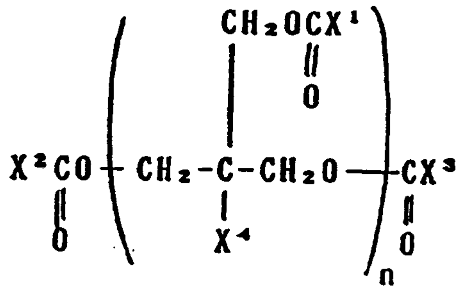

… ( I )

wherein each of $X^1$, $X^2$ and $X^3$ is independently a hydrogen atom or a group represented by the formula

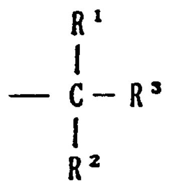

… ( II )

in terms of each repeating unit; $X^4$ is an alkyl group having 1 to 3 carbon atoms, $-CH_2OH$ or a group represented by the formula

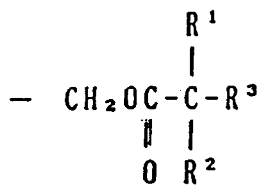

… ( III )

n is an integer of from 1 to 3; each of $R^1$ and $R^2$ is independently a methyl group or an ethyl group; $R^3$ is an alkyl group having 3 to 8 carbon atoms; but when $X^4$ is an alkyl group having 1 to 3 carbon atoms or $-CH_2OH$, all of $X^1$, $X^2$ and $X^3$ are not the hydrogen atoms simultaneously .

The above-mentioned lubricating oil mainly comprising the ester of the carboxylic acid having the specific structure and the neopentyl polyol is excellent in electrical insulating properties, stability to hydrolysis, wear resistance and non-hydgroscopicity. In addition, this lubricating oil is also excellent in compatibility with a hydrogen-containing halogeno carbon, and therefore it is particularly desirable as a refrigerator oil.

Heretofore, the effects of the ester represented by formula (I) as refrigeration lubricants were not known at all, and this kind of ester is not on the market and its industrial applications were not known.

Now, the present invention will be described in more detail.

A lubricating oil of the present invention mainly comprises one or a mixture of two or more of esters represented by formula (I). However, if an ester which does not fall within formula (I) is used as the main component, various excellent characteristics cannot be obtained such as compatibility with a hydrogen-containing halogeno carbon, stability to hydrolysis and heat resistance.

Typical examples of an alkyl group having 3 to 8 carbon atoms represented by $R^3$ in the above-mentioned formulae (II) and (III) include an n-propyl group, iso-propyl group, n-butyl group, iso-butyl group, sec-butyl group, tert-butyl group,
n-pentyl group, iso-pentyl group, neo-pentyl group, n-hexyl group, iso-hexyl group, n-heptyl group, iso-heptyl group, n-octyl group and iso-octyl group.

The ester synthetic oil represented by formula (I) is excellent in compatibility with a hydrogen-containing halogeno carbon, electrical insulating properties and stability to hydrolysis, but in particular, an ester represented by the following formula (IV) is preferable, since the above-mentioned effects of this ester are remarkable.

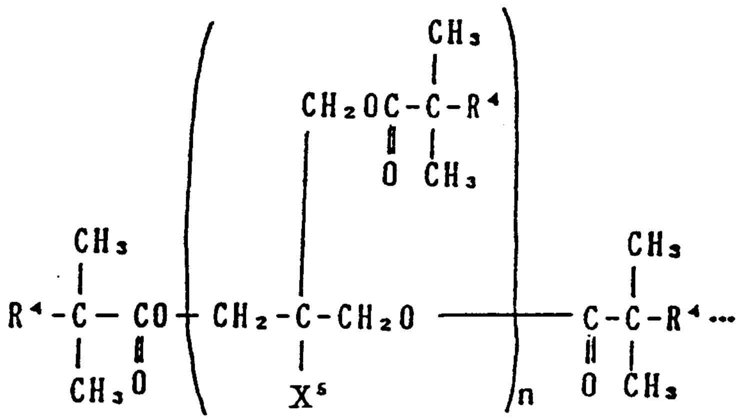 (IV)

wherein $R^4$ is an alkyl group having 3 or 4 carbon atoms, $X^5$ is an alkyl group having 1 to 3 carbon atoms or

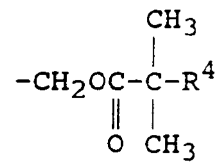

and n is 1 or 2.

The ester which can be used in the present invention can be prepared by an optional process, for example, by reacting 3 to 8 equivalents of a carboxylic acid represented by the formula

$$X'\text{-COOH} \qquad (V)$$

[wherein X' is identical with $X^1$, $X^2$ or $X^3$ in the formula (I)],
with trimethylolethane, trimethylolpropane, trimethylolbutane, pentaerythritol, a dimer or a trimer thereof [above all, trimethylolpropane, di-(trimethylolpropane), tri-(trimethylolpropane), pentaerythritol, di-(pentaerythritol), tri-(pentaerythritol) or a mixture thereof is preferable] at a temperature of from 100 to 180°C in the presence of an acid catalyst such as sulfuric acid. In the present invention, the ester may be used in the form of a mixture or a single substance. The thus obtained ester may be purified to remove by-products and unreacted materials therefrom, but small amounts of the by-products and the unreacted materials may be present in the ester, so long as they do not impair the excellent performance of the lubricating oil according to the present invention.

No particular restriction is put on the molecular weight of the ester regarding the present invention, but from the viewpoint of improving the hermetic condition of a compressor, the number average molecular weight of the ester is preferably from 200 to 3000, more preferably from 300 to 2000. Furthermore, the kinematic viscosity of the ester to be used in the present invention is in the range of from 2 to 150 cSt, preferably 4 to 100 cSt at 100°C.

As the lubricating oil of the present invention, one or more of the above-mentioned esters may be used singly, but the lubricating oil can contain the base oil of a lubricating oil such as the base oil of a refrigeration lubricant and additives which will be described hereinafter. In this case, the ester is contained in an amount of 50% by weight or more, preferably 70% by weight or more based on the total amount of the base oil containing the ester. In other words, the ester is contained in an amount of 20% by weight or more, preferably 30% by weight of more, more preferably 50% by weight or more based on the total weight of the lubricating oil.

When used as a refrigeration lubricant, the lubricating oil of the present invention should have a pour point which a usual refrigeration lubricant has, and for the purpose of preventing the solidification of the lubricating oil at a low temperature, the pour point of the lubricating oil is preferably -10°C or less, more preferably from -20 to -80°C.

Typical examples of a refrigerant for the refrigerator in which the lubricating oil of the present invention can be suitably used include hydrogen-containing halogeno carbons such as trifluoromethane (HFC-23), pentafluoroethane (HFC-125), 1,1,2,2-tetrafluoroethane (HFC-134), 1,1,1,2-tetrafluoroethane (HFC-134a), 1,1-difluoroethane (HFC-152a), monochlorodifluoromethane (HCFC-22), 1-chloro-1,1-difluoroethane (HCFC-142b), dichlorotrifluoroethane (HCFC-123) and monochlorotetrafluoroethane (HCFC-124); perhalogeno carbons such as trichloromonofluoromethane (CFC-11), dichlorodifluoromethane (CFC-12), monochlorotrifluoromethane (CFC-13) and monochloropentafluoroethane (CFC-115); and mixtures of two or more thereof. Above

all, non-chlorine FLONs such as HFC-23, HFC-125, HFC-134, HFC-134a and HFC-152a are preferable, and HFC-134a is the most preferable. The lubricating oil of the present invention is dissolved in HFC-134a usually at the temperature range of from -20 to 40°C, preferably from -30 to 50°C.

This lubricating oil can be particularly preferably used, as the refrigeration lubricant, in a cooling device having a reciprocating or a rotary compressor such as an air-conditioner, a dehumidifier, a refrigerator, a freezer, a refrigerator/freezer storehouse, a vending machine, a showcase and a chemical plant. In addition, it can also be preferably used in a device having a centrifugal compressor.

Further, the lubricating oil of the present invention can be preferably used as an engine oil, a gear oil, a hydraulic oil, a metal working oil, a gas turbine oil (particularly, a ceramic gas turbine oil) and other industrial lubricating oils in addition to the refrigeration lubricant.

Next, reference will be made to components which can be added to the lubricating oil together with the ester which can be used in the present invention.

In the lubricating oil of the present invention, the above-mentioned ester may be used singly, but if necessary, it may be mixed with the base oil of another lubricating oil, which is a mineral oil or a synthetic oil. Examples of the mineral oil include paraffinic and naphthenic base oils which can be obtained by distilling a crude oil under atmospheric pressure or reduced pressure to form a lubricating oil fraction, and then purifying the fraction through a suitably combined apparatus comprising a deasphalting unit, a solvent extraction unit, a hydrogenolysis unit, a solvent dewaxing unit, a contact dewaxing unit, a hydrogenating purification unit, a sulfuric acid washing unit, a clay treating unit and the like. Examples of the above-mentioned synthetic oil include polyα-olefins (e.g., polybutene, 1-octene oligomer and 1-decene oligomer), alkylbenzenes, alkylnaphthalenes, diesters (ditridecyl glutarate, di-2-ethylhexyl adipate, diisodecyl adipate, ditridecyl adipate and di-3-ethylhexyl sebacate), polyol esters (trimethylolpropane caprilate, trimethylpropane pelargonate, pentaerythritol-2-ethyl hexanoate and pentaerythiitol pelargonate), polyoxyalkylene glycols, polyphenyl ethers, silicone oils, perfluoro alkyl ethers and mixtures of two or more thereof. In this case, the ester regarding the present invention is contained in an amount of 50% by weight or more, preferably 70% by weight or more based on the total amount of the base oil containing the ester.

When the lubricating oil of the present invention is used as the refrigeration lubricant, the above-mentioned ester may be used singly, but if necessary, it may be mixed with the base oil of another refrigeration lubricant. Preferable examples of this base oil include polyoxyalkylene glycols, polyoxyalkylene glycol monoethers, polyoxy alkylene glycol diethers, polyoxyalkylene glycol glycerol ethers, complex esters of monools, diols, monocarboxylic acids and dicarboxylic acids, esters of carboxylic acids and neopentyl type polyols such as pentaerythritol, trimethylolpropane, dimers and trimers thereof, complex esters of neopentyl type polyols, monocarboxylic acids and dicarboxylic acids, and carbonates. These oils may be used singly or in combination of two or more thereof, and the amount of the oil to be mixed is 50% by weight or less, preferably 30% by weight or less based on the total weight of the lubricating oil.

Oils such as paraffinic mineral oils, naphthenic mineral oils, polyα-olefins and alkylbenzenes may be mixed with the ester. However, these oils are poor in compatibility with hydrogen-containing halogeno carbon refrigerants, and so the amount of each oil is 30% by weight or less, preferably 20% by weight or less based on the total amount of the lubricating oil.

Next, reference will be made to additives which can be blended with the lubricating oil in the present invention.

In order to heighten the excellent performance of the lubricating oil of the present invention, known additives can be added to the lubricating oil, if necessary. Examples of these additives include an antioxidant comprising a phenol, an amine, sulfur, zinc thiophosphate or phenothiazine; a friction reducing agent such as molybdenum dithiophosphate, molybdenum dithiocarbamate, molybdenum disulfide, carbon fluoride, a boric ester, an aliphatic amine, a higher alcohol, a higher fatty acid, a fatty ester or a fatty amide; an extreme pressure additive such as tricresyl phosphate, triphenyl phosphate or zinc dithiophosphate; a rust preventive such as petroleum sulfonate, an alkylbenzene sulfonate or dinonylnaphthalene sulfonate; a metal inactivating agent such as benzotriazole; a metallic detergent such as an alkaline earth metal sulfonate, an alkaline earth metal phenate, an alkaline earth metal salicylate or an alkaline earth metal phosphonate ; a non-ash dispersant such as imide succinate, a succinic ester or a benzylamine; an anti-foaming agent such as silicone; a viscosity index improver such as a polymethacrylate, a polyisobutylene or a polystyrene; and a pour point lowering agent. These additives can be used singly or in combination of two or more thereof. The content of the viscosity index improver is usually from 1 to 30% by weight, that of the anti-foaming agent is usually from 0.0005 to 1% by weight, that of the metal inactivating agent is usually 0.005 to 1% by weight, and that of each of the other additives is usually from 0.1 to 15% by weight (each content is based on the total amount of the lubricating oil).

Furthermore, when used as the refrigeration lubricant, the lubricating oil of the present invention can be blended with at least one phosphorus compound selected from the group consisting of a phosphate, an acidic

phosphate, an amine salt of an acidic phosphate, a chlorinated phosphate and a phosphite in order to improve the wear resistance and the load resistance of the lubricating oil. Each of these phosphorus compounds is an ester of phosphoric acid or phosphorous acid and an alkanol or a polyether type alcohol, or a derivative of the ester. In the concrete, examples of the above-mentioned phosphate include tributyl phosphate, triphenyl phosphate and tricresyl phosphate. Examples of the acidic phosphate include ditetradecyl acid phosphate, dipentadecyl acid phosphate, dihexadecyl acid phosphate, deheptadecyl acid phosphate and dioctadecyl acid phosphate. Examples of the amine salt of an acidic phosphate include salts of the above-mentioned acidic phosphates and amines such as methylamine, ethylamine, propylamine, butylamine, pentylamine, hexylamine, heptylamine, octylamine, dimethylamine, diethylamine, dipropylamine, dibutylamine, dipentylamine, dihexylamine, diheptylamine, dioctylamine, trimethylamine, triethylamine, tripropyleneamine, tributylamine, tripentylamine, trihexylamine, triheptylamine and trioctylamine. Examples of the chlorinated phosphate include tris·dichloropropyl phosphate, tris·chloroethyl phosphate, tris·chlorophenyl phosphate and polyoxyalkylene-bis[di(chloroalkyl)] phosphate. Examples of the phosphite include dibutyl phosphite, dipentyl phosphite, dihexyl phosphite, diheptyl phosphite, dioctyl phosphite, dinonyl phosphite, didecyl phosphite, diundecyl phosphite, didodecyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, triphenyl phosphite, tricresyl phosphite, and mixture thereof. When each phosphorus compound is blended with the lubricating oil, the content of the phosphorus compound is from 0.01 to 5.0% by weight, preferably from 0.01 to 2.0% by weight based on the total weight of the lubricating oil.

When used as the refrigeration lubricant, the lubricating oil of the present invention can be blended with at least one epoxy compound selected from the group consisting of a phenylglycidyl ether type epoxy compound, a glycidyl ester type epoxy compound, an epoxidized fatty acid monoester and an epoxidized vegetable oil in order to improve the stability of the lubricating oil. Examples of the phenylglycidyl ether type epoxy compound include phenylglycidyl ether and alkyl phenylglycidyl ether. This alkyl phenylglycidyl ether has 1 to 3 alkyl groups of 1 to 13 carbon atoms, preferably one alkyl group of 4 to 10 carbon atoms, and preferable examples of the alkyl phenylglycidyl ether include butyl phenylglycidyl ether, pentyl phenylglycidyl ether, hexyl phenylglycidyl ether, heptyl phenylglycidyl ether, octyl phenylglycidyl ether, nonyl phenylglycidyl ether and decyl phenylglycidyl ether. Examples of the glycidyl ester type epoxy compound include phenyl glycldyl ester, alkyl glycidyl esther and alkenyl glycidyl ester, and preferable examples thereof are glycidyl benzoate, glycidyl acrylate and glycidyl methacrylate. Furthermore, examples of the epoxidized fatty acid monoester include esters of epoxidized fatty acids having 12 to 20 carbon atoms and alcohols having 1 to 8 carbon atoms, phenols and alkylphenols. In particular, butyl, hexyl, benzyl, cyclohexyl, methoxyethyl, octyl, phenyl and butylphenyl esters of epoxystearic acid can be preferably used. Examples of the epoxidized vegetable oil include epoxy compounds of vegetable oils such as soybean oil, linseed oil and cotton seed oil.

Of these epoxy compounds, preferable examples are the phenylglycidyl ether type epoxy compound and the epoxidized fatty acid monoester. Above all, the phenylglycidyl ether type epoxy compound is more preferable, and the phenylglycidyl ether, the butyl phenylglycidyl ether and a mixture thereof are particularly preferable.

The amount of the epoxy compound is from 0.1 to 5.0% by weight, preferably from 0.2 to 2.0% by weight based on the total amount of the lubricating oil.

When the lubricating oil of the present invention is used as the refrigeration lubricant, a carboxylic acid represented by the formula

$$R^4\text{-}CH(COOH)^2$$

and/or

$$R^5\text{-}CH_2\text{-}COOH$$

(wherein $R^4$ and $R^5$ may be identical or different, and each of them is an alkyl group having 8 to 18 carbon atoms)

can be blended with the lubricating oil in order to further improve the wear resistance and the load resistance of the lubricating oil. Typical examples of this carboxylic acid include octylmalonic acid, nonylmalonic acid, decylmalonic acid, undecylmalonic acid, dodecylmaromic acid, tridecylmaronic acid, tetradecylmaronic acid, pentadecylmaronic acid, hexadecylmalonic acid, heptadecylmaronic acid, octadecylmaronic acid, decanoic acid, undecanoic acid, lauric acid, tridecanoic acid, myristicic acid, pentadecanoic acid, palmitic acid, heptadecanoic acid, stearic acid, nonadecanoic acid, eicosanic acid and mixtures thereof. When each carboxylic acid is blended with the lubricating oil, the content of the carboxylic acid is from 0.01 to 3% by weight, preferably 0.05 to 2% by weight based on the total weight of the lubricating oil.

Needless to say, two or more of the above-mentioned phosphorus compound, epoxy compound and carboxylic acid may be used together.

Additionally, for the purpose of improving the characteristics of the lubricating oil according to the present

invention, the lubricating oil can be blended with known additives for the refrigerator oil, if necessary. Samples of these additives include anti-oxidants of phenolic compounds such as di-tert-butyl-p-cresol and bisphenol A as well as amine compounds such as phenyl-α-naphthylamine and N,N-di(2-naphthyl)-p-phenyl-enediamine; a wear resistance such as zinc dithiophosphate; extreme pressure additives such as chlorinated paraffins and sulfur compounds; an oiliness improver such as a fatty acid; an anti-foaming agent such as a silicone compound; and a metal inactivating agent such as benzotriazole. These additives can be used singly or in combination. The total amount of these additives is usually 10% by weight, preferably 5% by weight or less based on the total weight of the lubricating oil.

Now, the present invention will be described in more detail in reference to examples and comparative examples, but the scope of the present invention should be not limited at all to these examples. In these examples, lubricating oils only comprising esters regarding the present invention will be referred to, but needless to say, the lubricating oils to which other base oils and additives are added can also exert similar effects.

Examples 1 to 3 and Comparative Examples 1 to 4

Example 1:

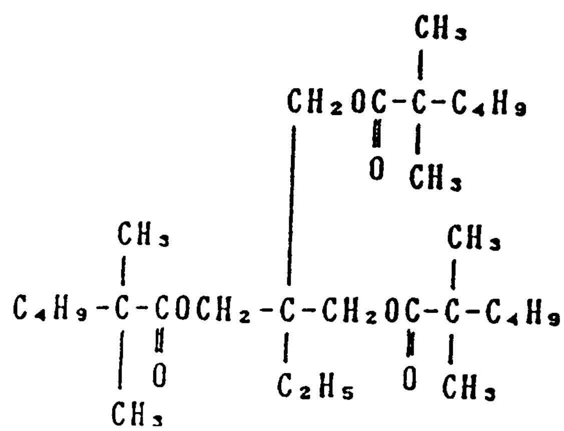

Example 2:

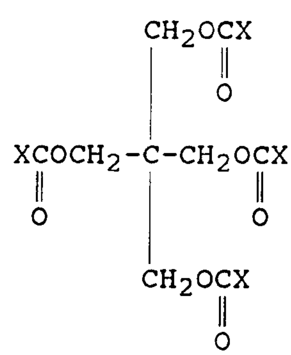

(wherein X is

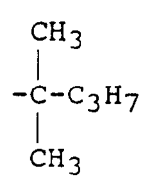 (1) or 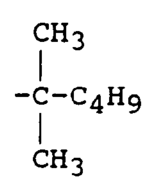 (2)

and a molar ratio of (1) to (2) is 1:1).

Example 3:

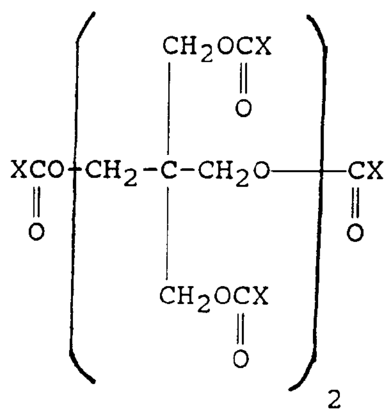

(wherein X is

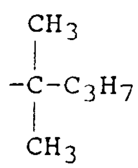 (1) or 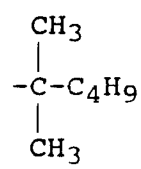 (2)

and a molar ratio of (1) to (2) is 1:1).

| | |
|---|---|
| Comparative Example 1: | Naphthenic mineral oil. |
| Comparative Example 2: | Polyoxypropylene glycol monobutyl ether (average molecular weight about 1,000). |
| Comparative Example 3: | Polyoxypropylene glycol (average molecular weight about 1,000). |
| Comparative Example 4: | Tetraester of pentaerythritol, n-heptanoic acid, and n-octanic acid. |

Esters for Examples 1 to 3 regarding the present invention were synthesized in accordance with an ordinary process and then purified, and the thus obtained esters were evaluated as base oils for refrigeration lubricants by measuring compatibility with HFC-134a, resistance to hydrolysis, insulating properties and hygroscopicity and by carrying out a FALEX wear test in the following manners. For comparison, test results of a mineral oil, a polyol tetraester, a polypropylene glycol monoalkyl ether and a polyalkylene glycol which have been heretofore used as the refrigerator oils are also set forth together in Table 1.

(Compatibility with HFC-134a)

0.2 g of a sample oil and 2.0 g of a refrigerant (HFC-134a) for each of examples and comparative examples were placed in a glass tube having an internal diameter of 6 mm and a length of 220 mm, and the glass tube was then sealed. This glass tube was put in a low-temperature or a high-temperature tank having a predetermined temperature, and it was observed whether or not the sample oil and the refrigerant were separated or became a milky turbidity state.

(Hydrolysis test)

60 g of a sample oil and 0.6 g of water were placed in a glass test tube having a volume of 200 ml, and a copper plate, an iron plate and an aluminum plate were further placed therein as deterioration accelerating catalysts. Afterward, the test tube was heated at 175°C for 168 hours in a stainless steel autoclave.

(Insulating properties)

A volume resistivity of a sample oil at 25°C was measured in accordance with JIS C 2101.

(FALEX wear test)

A sample oil was subjected to shakedown drive at a test oil temperature of 100°C for 1 minute under a load of 150 lb., and then used during driving for 2 hours under a load of 250 lb in accordance with ASTM D 2670. Afterward, the wear amount of a test journal was measured.

(Hygroscopicity)

30 g of a sample oil was placed in a 300-ml beaker and then allowed to stand in a constant temperature/constant humidity chamber for 7 days in which a temperature of 30°C and a humidity of 60% were maintained. Afterward, a water content in the sample oil was measured in accordance with the Karl Fischer method.

Table 1

| Example/ Comp. Ex. | Kinematic Viscosity at 100°C cSt. | Dissolution Temp. Range of HFC-134a °C | Hydrolysis Properties Acid Value mgKOH/g |
|---|---|---|---|
| Example 1 | 4.7 | -70 to 80 | 0.5 |
| Example 2 | 5.1 | -70 to 80 | 0.3 |
| Example 3 | 8.4 | -42 to 80 | 0.5 |
| Comp. Ex. 1 | 5.1 | not dissolved | 0.1 |
| Comp. Ex. 2 | 10.8 | -70 to 56 | 0.1 |
| Comp. Ex. 3 | 10.2 | -51 to 64 | 0.1 |
| Comp. Ex. 4 | 4.9 | not dissolved | 22.5 |

Table 1 (Cont'd)

| Example/ Comp. Ex. | Volume Resistivity at 25°C Ω•cm | FALEX Test Wear Amount of Pin mg | Hygroscopicity at 30°C & 60% |
|---|---|---|---|
| Example 1 | $1.2x10^{14}$ | 7 | 0.12 |
| Example 2 | $1.6x10^{14}$ | 5 | 0.13 |
| Example 3 | $1.1x10^{14}$ | 3 | 0.09 |
| Comp. Ex. 1 | $3.8x10^{15}$ | 23 | 0.01 |
| Comp. Ex. 2 | $1.2x10^{11}$ | 35 | 1.01 |
| Comp. Ex. 3 | $4.8x10^{10}$ | 30 | 1.81 |
| Comp. Ex. 4 | $1.8x10^{14}$ | 12 | 0.11 |

As shown in Examples 1 to 3 of Table 1, the refrigerator oils of the present invention are very excellent in compatibility with HFC-134a of a refrigerant as compared with Comparative Examples 1 to 4.

The results of Table 1 indicate that the resistance to hydrolysis of the refrigeration lubricants in Examples 1 to 3 is comparable to that of the mineral oil and the polyalkylene glycols in Comparative Examples 1 to 3 and much more excellent than that of a usual polyol tetra- ester.

As shown in Comparative Examples 2 and 3, the polyalkylene glycols are excellent in compatibility with the refrigerant but poor in volume resistivity, and therefore they cannot be applied to hermetic type compressors. On the other hand, the refrigeration lubricants in Examples 1 to 3 have electrical insulating properties equal to that of the conventional mineral oil.

Also in the FALEX wear test, the results of Examples 1 to 3 are more excellent than those of Comparative Examples 1 to 4.

In the refrigeration lubricants of Examples 1 to 3, the hygroscopicity of water is much lower than in polyalkylene glycols of Comparative Examples 2 and 3, which means that the refrigeration lubricants of Examples 1 to 3 are remarkably excellent.

Although the invention has been described with preferred embodiment, it is to be understood that variations and modifications may be resorted to as will be apparent to those skilled in the art. Such variations and modifications are to be considered within the purview and the scope of the claims appended hereto.

## Claims

1. A synthetic lubricating oil which is characterized by containing, as the main component, an ester represented by the formula

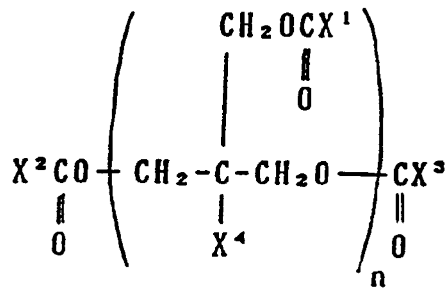

wherein each of $X^1$, $X^2$ and $X^3$ is independently a hydrogen atom or a group represented by the formula

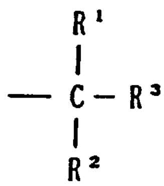

in terms of each repeating unit; $X^4$ is an alkyl group having 1 to 3 carbon atoms, $-CH_2OH$ or a group represented by the formula

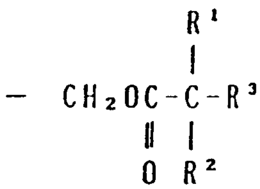

n is an integer of from 1 to 3; each of $R^1$ and $R^2$ is independently a methyl group or an ethyl group; $R^3$ is an alkyl group having 3 to 8 carbon atoms; but when $X^4$ is the alkyl group having 1 to 3 carbon atoms or $-CH_2OH$, all of $X^1$, $X^2$ and $X^3$ are not the hydrogen atoms simultaneously.

2. The synthetic lubricating oil according to Claim 1 characterised by containing, as the main component, an ester represented by the formula

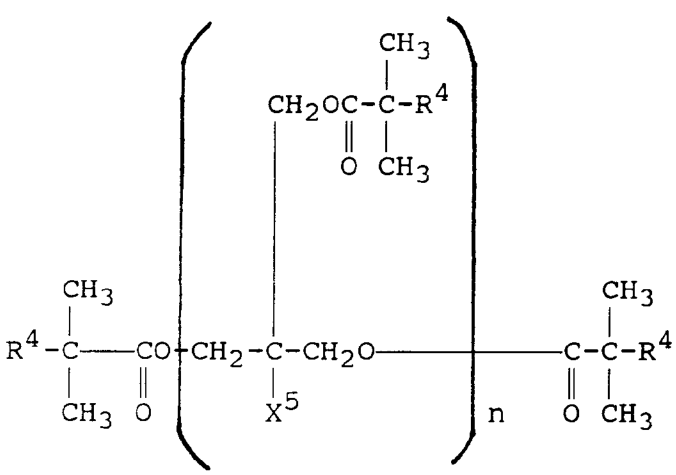

wherein $R^4$ is an alkyl group having 3 or 4 carbon atoms, $X^5$ is an alkyl group having 1 to 3 carbon atoms or

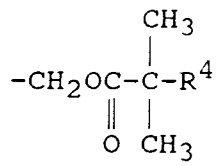

and n is 1 or 2.

3. The synthetic lubricating oil according to Claim 1 characterised in that the number average molecular weight of said ester is from 200 to 3000.

4. The synthetic lubricating oil according to Claim 1 characterised in that said synthetic lubricating oil contains a base oil and the content of said ester is 50% by weight or more based on the total weight of said base oil and 20% by weight or more based on the total weight of said synthetic lubricating oil.

5. The synthetic lubricating oil according to any one of Claims 1 to 4 characterised in that it is used as a refrigeration lubricant.

6. The synthetic lubricating oil according to any one of Claims 1 to 4 characterised in that it is a refrigeration lubricant in a refrigerator using a hydrogen-containing halogeno carbon as a refrigerant.

**Patentansprüche**

1. Synthetisches Schmieröl, dadurch gekennzeichnet, daß es als Hauptkomponente einen Ester der Formel

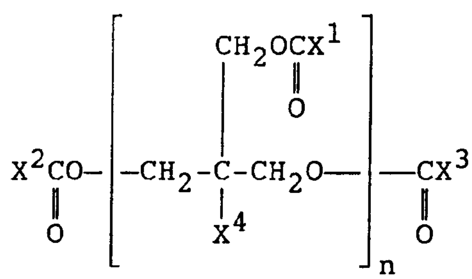

enthält, worin jeder der Reste $X^1$, $X^2$ und $X^3$ unabhängig voneinander ein Wasserstoffatom oder eine Gruppe der Formel

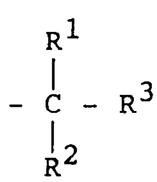

bezüglich jeder sich wiederholenden Einheit darstellt; $X^4$ eine Alkylgruppe mit 1 bis 3 Kohlenstoffatomen, $-CH_2OH$ oder eine Gruppe der Formel

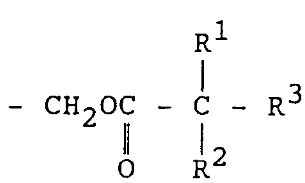

bedeutet,

wobei n eine ganze Zahl von 1 bis 3 darstellt; jeder der Reste $R^1$ und $R^2$ unabhängig voneinander eine Methylgruppe oder eine Ethylgruppe darstellt; und $R^3$ eine Alkylgruppe mit 3 bis 8 Kohlenstoffatomen bedeutet; jedoch wenn $X^4$ die Alkylgruppe mit 1 bis 3 Kohlenstoffatomen oder $-CH_2OH$ darstellt, alle Reste $X^1$, $X^2$ und $X^3$ nicht gleichzeitig Wasserstoffatome darstellen.

2. Synthetisches Schmieröl nach Anspruch 1, dadurch gekennzeichnet, daß es als Hauptkomponente einen Ester der Formel

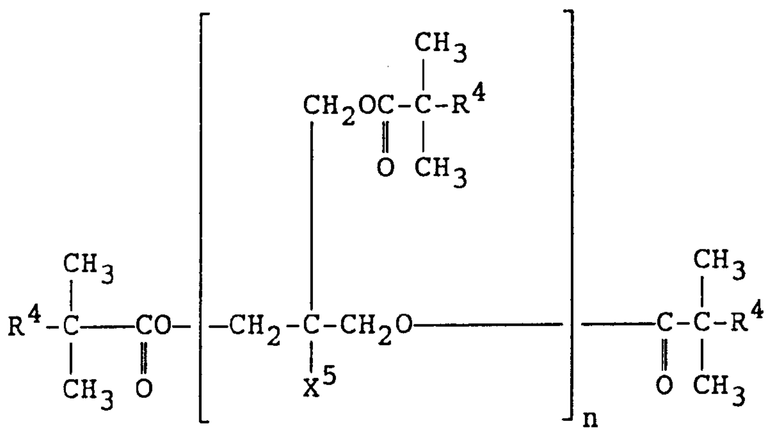

worin $R^4$ eine Alkylgruppe mit 3 oder 4 Kohlenstoffatomen bedeutet, $X^5$ eine Alkylgruppe mit 1 bis 3 Kohlenstoffatomen oder

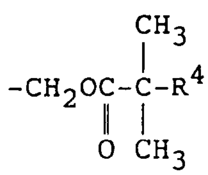

bedeutet und n 1 oder 2 ist, enthält.

3. Synthetisches Schmieröl nach Anspruch 1, dadurch gekennzeichnet, daß das zahlenmittlere Molekulargewicht des Esters 200 bis 3000 beträgt.

4. Synthetisches Schmieröl nach Anspruch 1, dadurch gekennzeichnet, daß das synthetische Schmieröl ein Grundöl enthält und der Anteil des Esters 50 Gew.-% oder mehr, bezogen auf das Gesamtgewicht des Grundöls und 20 Gew.-% oder mehr, bezogen auf das Gesamtgewicht des synthetischen Schmieröls, beträgt.

5. Synthetisches Schmieröl nach einem der Ansprüche 1 bis 4, dadurch gekennzeichnet, daß es als Schmiermittel in Kühlvorrichtungen verwendet wird.

6. Synthetisches Schmieröl nach einem der Ansprüche 1 bis 4, dadurch gekennzeichnet, daß es ein Schmiermittel für Kühlvorrichtungen darstellt in einer Kühlvorrichtung, die als Kühlmittel Wasserstoff-enthaltenden Halogenkohlenstoff enthält.

## Revendications

1. Une huile lubrifiante synthétique qui est caractérisée en ce qu'elle contient, comme composant principal, un ester représenté par la formule

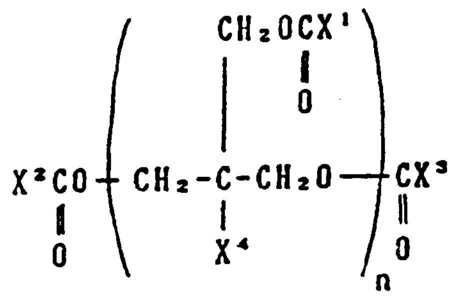

dans laquelle chacun de $X^1$, $X^2$ et $X^3$ est indépendamment un atome d'hydrogène ou un groupe représenté par la formule

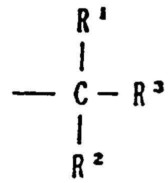

pour chaque motif répété ; $X^4$ est un groupe alkyle ayant 1 à 3 atomes de carbone, $-CH_2OH$ ou un groupe représenté par la formule

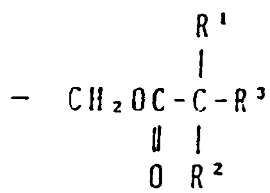

n est un entier de 1 à 3 ; chacun de $R^1$ et de $R^2$ est indépendamment un groupe méthyle ou un groupe éthyle ; $R^3$ est un groupe alkyle ayant 3 à 8 atomes de carbone ; mais lorsque $X^4$ est le groupe alkyle ayant 1 à 3 atomes de carbone ou $-CH_2OH$, $X^1$, $X^2$ et $X^3$ ne sont pas tous simultanément des atomes d'hydrogène.

**2.** L'huile lubrifiante synthétique selon la revendication 1, caractérisée en ce qu'elle contient, comme composant principal, un ester représenté par la formule

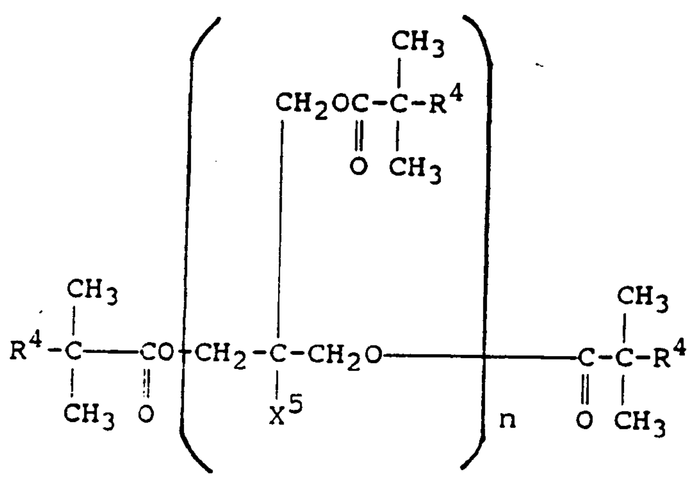

dans laquelle $R^4$ est un groupe alkyle ayant 3 ou 4 atomes de carbone, $X^5$ est un groupe alkyle ayant 1 à 3 atomes de carbone ou

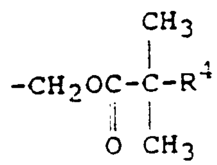

et n est 1 ou 2.

3. L'huile lubrifiante synthétique selon la revendication 1, caractérisée en ce que la moyenne en nombre du poids moléculaire dudit ester est de 200 à 3 000.

4. L'huile lubrifiante synthétique selon la revendication 1, caractérisée en ce que ladite huile lubrifiante synthétique contient une huile de base et la teneur dudit ester est de 50 % en poids ou plus, relativement au poids total de ladite huile de base, et de 20 % en poids ou plus, relativement au poids total de ladite huile lubrifiante synthétique.

5. L'huile lubrifiante synthétique selon l'une quelconque des revendications 1 à 4, caractérisée en ce qu'on l'utilise comme lubrifiant pour machines frigorifiques.

6. L'huile lubrifiante synthétique selon l'une quelconque des revendications 1 à 4, caractérisée en ce qu'elle est un lubrifiant pour machines frigorifiques dans une machine frigorifique utilisant comme fluide frigorigène un halogénocarbure hydrogéné.